# EUROPÄISCHE PATENTSCHRIFT

(11) **EP 3 078 620 B1**
(45) Veröffentlichungstag und Bekanntmachung des Hinweises auf die Patenterteilung: **25.10.2017**
(21) Anmeldenummer: 16161218.9
(22) Anmeldetag: 18.03.2016
(51) Int. Cl.: B66C 1/02, B25J 15/06

(54) **HUBSCHLAUCH UND HANDHABUNGSVORRICHTUNG**
LIFTING TUBE AND HANDLING DEVICE
TUBE DE LEVAGE ET DISPOSITIF DE MANIPULATION

(30) Priorität: 09.04.2015 DE 102015206322
(43) Veröffentlichungstag der Anmeldung: 12.10.2016
(73) Patentinhaber: J. Schmalz GmbH, 72293 Glatten (DE)
(72) Erfinder: Mast, Jonas, 72270 Baiersbronn (DE); Kohler, Jonathan, 72296 Schopfloch (DE)
(74) Vertreter: DREISS Patentanwälte PartG mbB

(56) Entgegenhaltungen:
- DE-A1- 19 812 537
- DE-C3- 2 152 584

## Beschreibung

Die Erfindung betrifft einen Hubschlauch gemäß dem Oberbegriff des Anspruchs 1 sowie eine Handhabungsvorrichtung gemäß dem Oberbegriff des Anspruchs 15.

Hubschläuche finden z.B. in Schlauchhebern Verwendung. Dabei wird durch eine unterdruckbedingte Verkürzung des Hubschlauches das Anheben eines gegriffenen Gegenstandes unterstützt. Jedoch sind für die Hubschläuche auch andere Anwendungen, z.B. als pneumatische Aktuatoren denkbar. Dabei ist durch überdruckbedingte Verlängerung des Hubschlauches eine Kraft auf einen Gegenstand ausübbar, z.B. zum Anheben oder Bewegen von Lasten.

Schlauchheber mit Hubschläuchen sind z.B. in der WO 2005/110907 A1, der DE 198 12 537 A1 oder in der US 4,413,853 beschrieben. Ein Hubschlauch mit den Merkmalen der Oberbegriffs des Anspruchs 1 ist in der DE 21 52 584 C3 beschrieben. Diese Hubschläuche weisen eine faltenbalgartige Ausgestaltung mit entlang der axialen Erstreckung abwechselnd als Innenfalte und Außenfalte ausgebildeten umlaufenden Ringfalten, oder eine Ausgestaltung mit einer die Längsachse des Hubschlaues schraubenartig umlaufenden Schraubenfaltlinie auf. Üblicherweise ist hierbei in die Außenfalte des Hubschlauches ein Drahtgerüst eingelegt, welches ein radiales Zusammenziehen des Hubschlauches verhindert. Das Kontraktionsverhältnis solcher Hubschläuche, d.h. das Verhältnis der axialen Länge in der kontrahierten Konfiguration zu der Länge in der langgestreckten Konfiguration lässt sich nicht ohne Weiteres auf unter 25 % bis 30 % reduzieren, da aufgrund Zusammenfaltens der Schlauchwandung entlang der Längsachse die aufeinanderliegenden Materiallagen sowie die gegebenenfalls in den Außenfalten liegenden Drahtgerüste einen gewissen Raum beanspruchen. Bei Verwendung solcher Hubschläuche in einem Schlauchheber ist daher bei einer gewünschten Hubhöhe eine nicht unerhebliche Gesamthöhe der Vorrichtung erforderlich.

Die Aufgabe der vorliegenden Erfindung besteht darin, das Kontraktionsverhältnis zu verbessern und den Hubschlauch möglichst robust, verschleißarm und kosteneffizient herstellbar zu gestalten.

Diese Aufgabe wird durch den Hubschlauch gemäß Anspruch 1 gelöst, welcher eine Schlauchwandung aufweist, die sich um eine Längsachse erstreckt und einen axial ausgedehnten Schlauchinnenraum umschließt, wobei der Hubschlauch entlang seiner Längsachse reversibel in eine lang gestreckte Konfiguration (großes Volumen des Schlauchinnenraums) und in eine kontrahierte Konfiguration (kleines Volumen des Schlauchinnenraums) verformbar ist.

Durch Beaufschlagung des Schlauchinnenraums mit einem Unterdruck gegenüber der Umgebung kann beispielsweise eine Verformung in die kontrahierte Konfiguration herbeigeführt werden (z.B. Verwendung als Hubschlauch in einer Unterdruckhebevorrichtung). Andererseits kann z.B. durch Beaufschlagung des Schlauchinnenraumes mit einem Überdruck gegenüber der Umgebung eine Verformung in die langestreckte Konfiguration herbeigeführt werden, um z.B. eine Kraft auf einen Gegenstand auszuüben (Verwendung als pneumatischer Aktuator).

Die Schlauchwandung weist eine Vielzahl von Außenknicklinien auf, entlang welcher die Schlauchwandung zur Herbeiführung der kontrahierten Konfiguration knickbar beziehungsweise faltbar ist. Dabei verlaufen die Außenknicklinien derart schräg zueinander an bzw. in der Schlauchwandung, dass beim Verformen ausgehend von der langgestreckten Konfiguration in die kontrahierte Konfiguration Abschnitte der Schlauchwandung eine Torsion um die Längsachse herum erfahren.

Die Faltung entlang der schräg zueinander verlaufenden Außenknicklinien und die damit verbundene Torsion der Schlauchwandung führt dazu, dass die ausgehend von den Außenknicklinien nach innen gefalteten Bereiche der Schlauchwandung in den Schlauchinnenraum nicht nur entlang der Längsachse eingefaltet, sondern auch eingedreht werden. Dadurch kann ein höheres Kontraktionsverhältnis erzielt werden. Außerdem ergibt sich je nach Ausgestaltung eine geringere Materialbeanspruchung als bei Kompression der Schlauchwandung durch einfaches Einfalten entlang der Längsachse.

Die Kombination mehrerer geneigt zueinander Knicklinien führt außerdem zu einer erheblichen Stabilität gegen radiale Kompression. Ein unerwünschtes radiales Eindellen der Schlauchwandung wird vermieden. Außerdem kann die Materialsteifigkeit in Kombination mit den schräg zueinander verlaufenden Faltrichtungen dazu ausgenutzt werden, eine Rückstellkraft gegen eine Verformung des Hubschlauches in die kontrahierte Konfiguration zu erzielen, was z.B. bei Verwendung als Hubschlauch erwünscht sein kann. Andererseits kann je nach Ausgestaltung eine Rückstellkraft gegen eine Verformung in die langgestreckte Konfiguration erzielt werden.

Von den Außenknicklinien erstreckt sich das Material der Schlauchwandung jeweils zum Schlauchinneren beziehungsweise zur Längsachse hin, insbesondere derart, dass in der kontrahierten Konfiguration eine Außenfalte gebildet ist. Da mehrere Außenknicklinien schräg zu einander verlaufen, kann eine hohe Stabilität erzeugt werden. Auf eine Verstärkung durch in den Außenfalten verlaufende Drahtgerüste kann bei Bedarf verzichtet werden, wobei solche Verstärkungsgerüste grundsätzlich als optionale Ausgestaltungen möglich sind.

Um die Torsion zu erzielen, umfassen die Außenknicklinien eine Vielzahl von die Längsachse geschlossen umlaufenden Ringknicklinien sowie eine Anzahl n von die Ringknicklinien schneidenden Schrägknicklinien, wobei die Schrägknicklinien derart schräg zu den Ringknicklinien verlaufen, dass beim Falten der Schlauchwandung entlang der Schrägknicklinien und/oder der Ringknicklinien die Torsion erzielt wird. Insbesondere sind sämtliche der Außenknicklinien der Schlauchwandung entweder solche Ringknicklinien oder solche Schrägknicklinien. Vorzugsweise sind die umlaufenden Ringknicklinien entlang der Längsachse aufeinander folgend angeordnet. Zwischen den aufeinander folgenden Ringknicklinien sind somit Ringabschnitte der Schlauchwandung definiert, wobei die Schlauchwandung in dem jeweiligen Ringabschnitt entlang der Schrägknicklinien zur Herstellung der kontrahierten Konfiguration einfaltbar ist. Beim Einfalten der Schlauchwandung entlang der geneigt verlaufenden Schrägknicklinien werden dann die oberhalb des Ringabschnitts liegenden Bereiche der Schlauchwandung gegenüber denen unterhalb des Ringabschnitts liegenden Bereichen verdreht.

Vorteilhaft ist insbesondere, wenn sämtliche Ringknicklinien senkrecht zur Längsachse verlaufen. Dadurch ergibt sich eine hohe Stabilität des Hubschlauches gegen Scherbewegungen.

Materialspannungen beim Einfalten beziehungsweise bei der Torsion können dadurch vermieden werden, dass zumindest in der lang gestreckten Konfiguration sämtliche der Schrägknicklinien parallel zueinander verlaufen. Insofern umlaufen die Schrägknicklinien insbesondere die Längsachse auf der Schlauchwandung schraubenartig.

Vorteilhaft ist auch, wenn sämtliche sich mit einer jeweiligen Ringknicklinien schneidenden Schrägknicklinien mit dieser Ringknicklinie im Schnittpunkt einen überstimmenden spitzen Winkel, den sogenannten Steigwinkel einschließen. Dadurch können sämtliche Schrägknicklinien gleichzeitig zu der jeweiligen Ringknicklinie spannungsfrei hingefaltet werden, was die gewünschte Torsion erzeugt. Je größer der Steigwinkel, desto größer ist auch der Torsionswinkel, um welchen sich die Schlauchwandung beim Einfalten der Schrägknicklinien auf die Ringknicklinien um die Längsachse herum verdreht.

Nach einer vorteilhaften Ausgestaltung ist - für jede Ringknicklinie betrachtet - die Summe der Steigwinkel in den Schnittpunkten auf dieser Ringknicklinie insgesamt 360°. Bei Einhaltung dieser Winkelsumme ist ein besonders spannungsfreies Einfalten möglich.

Im vorliegenden Zusammenhang sind insbesondere die Ringknicklinien nicht als kreisrunde Linien zu verstehen. Vielmehr bilden sich in den Schnittpunkten der Ringknicklinien mit den Schrägknicklinien Ecken aus. Insofern unterscheidet sich der Hubschlauch von den bekannten Faltenbalgformen oder Schraubenlinienformen. Vorzugsweise weisen die Ringknicklinien entlang der Längsachse betrachtet die Form eines regelmäßigen Polygons, insbesondere eines gleichseitigen Polygons, mit einer Anzahl n von Ecken auf. Die Ecken des Polygons stimmen insbesondere mit den Schnittpunkten der jeweiligen Ringknicklinie mit den Schrägknicklinien überein. Durch die Form eines regelmäßigen Polygons entsteht eine Symmetrie (zumindest im Sinne einer n-zähligen Achse) um die Längsachse des Hubschlauches. Dadurch kann vermieden werden, dass sich der Hubschlauch bei seitig wirkenden Scherkräften asymmetrisch verhält.

Vorteilhaft ist insbesondere, wenn der Steigwinkel den n-Enden Bruchteil von 360° beträgt, wobei n die Anzahl der Ecken auf einer jeweiligen Ringknicklinie ist. Dadurch ergibt sich ein hohes Maß an Symmetrie, was zu geringen lokalen Spannungen bei der Kontraktion und damit zu einem geringen Materialverschleiß führt. Als besonders vorteilhaft hat sich beispielsweise ein hexagonaler Verlauf der Ringknicklinien mit einem zugeordneten Steigwinkel von 60° erwiesen.

Weiterhin ist es vorteilhaft, wenn in jedem Schnittpunkt die sich schneidende Ringknicklinie und die zugeordnete Schrägknicklinie jeweils gleichlange Schenkel bilden, die einen spitzen Winkel (den oben genannten Steigwinkel) einschließen. Insofern ist die Länge der Schenkel von dem betrachteten Schnittpunkt aus bis zum jeweils benachbarten Schnittpunkt entlang der jeweiligen Knicklinie für die beiden sich schneidenden Knicklinien gleichlang. Dadurch ist es möglich, zwischen je zwei entlang der Längsachse aufeinanderfolgenden Ringknicklinien die Schrägknicklinien vollständig auf die schneidenden Ringknicklinien herunterzufalten. Dadurch ergibt sich ein hohes Kontraktionsverhältnis.

Nach einer vorteilhaften Ausgestaltung sind die Ringknicklinien entlang der Längsachse jeweils mit regelmäßigem Abstand voneinander, der sogenannten Lagenhöhe, angeordnet. Die Lagenhöhe gibt den Abstand zweier entlang der Längsachse benachbarten Ringknicklinien wieder. Zwischen der Lagenhöhe, dem Steigwinkel und der Länge der sich in einem Schnittpunkt schneidenden Schenkel (siehe oben) sowie gegebenenfalls der Anzahl der Ecken der jeweiligen Ringknicklinie besteht somit ein direkter Zusammenhang. Bei Kontraktion wird jeweils der Bereich zwischen zwei Ringknicklinien unter Torsion eingefaltet, wobei die Ausdehnung des Hubschlauches entlang der Längsachse von der Lagenhöhe bis annähernd auf die gesamte Dicke der aufeinander liegenden Materiallagen zwischen zwei Ringknicklinien verringert werden kann.

Die Schlauchwandung umfasst neben den Außenknicklinien vorzugsweise eine Mehrzahl von Innenknicklinien, von welchen aus sich in der kontrahierten Konfiguration die Schlauchwandung nach außen (das heißt von der Längsachse weg) zu den Außenknicklinien hin erstreckt. Jede der Innenknicklinien verläuft vorzugsweise durch Schnittpunkte zweier entlang der Längsachse benachbarter Ringknicklinien, wobei die Schnittpunkte jeweils verschiedenen Schräglinien zugeordnet sind. Das zwischen den benachbarten Ringknicklinien liegende Material der Schlauchwandung bildet an der Innenknicklinie einen Innenfalte aus, die in den Schlauchinnenraum hineinragt und bei Kontraktion in den Innenraum hineinverdreht wird.

Die Innenknicklinie verläuft vorzugsweise derart, dass insbesondere bei Vorliegen der langgestreckten Konfiguration die Innenknicklinie eine Winkelhalbierende des sich in einem Schnittpunkt schneidenden Winkels bildet, dessen Schenkel durch die dem jeweiligen Schnittpunkt zugeordnete Ringknicklinie und Schrägknicklinie gebildet sind. Da die Innenknicklinie die Winkelhalbierende der beiden sich schneidenden Außenknicklinien ist, können die Außenknicklinien aufeinander gefaltet werden. Insbesondere bilden die Innenknicklinien jeweils Diagonalen von Parallelogrammen, die von Ringknicklinien und den Steigknicklinien definiert sind und deren Ecken die jeweiligen Schnittpunkte bilden.

Eine vorteilhafte Ausgestaltung ergibt sich dadurch, dass die Schlauchwandung eine Vielzahl von Verstärkungszonen aufweist, welche von Kanten begrenzt sind, die entlang der einander schneidenden Innenknicklinien, Ringknicklinien und Schrägknicklinien verlaufen. Die Verstärkungszonen sind Bereiche der Schlauchwandung, in welchen die Schlauchwandung weniger flexibel ist als im Bereich der Außenknicklinien oder Innenknicklinien. Die Verstärkungszonen können beispielsweise durch Verstärkungsplatten gebildet sein, welche entlang der genannten Kanten begrenzt sind. Die Verstärkungsplatten sind z.B. an der Schlauchwandung angeordnet, z.B. auf einer Innenseite oder einer Außenseiten. Die Verstärkungszonen haben vorzugsweise polygonale, insbesondere dreieckige Form, wobei eine Seite von einer Innenknicklinie, eine Seite von einer Ringknicklinie und eine Seite von einer Schrägknicklinie definiert ist.

Durch die Innenknicklinien wird vorgegeben, wie das Material der Schlauchwandung bei Kontraktion in den Schlauchinnenraum eingefaltet ist. Somit begrenzen die Innenknicklinien bei Projektion entlang der Längsachse betrachtet eine Schlauchquerschnittsfläche. Aufgrund der Torsion werden bei Kontraktion der Schlauchwandung die Innenknicklinien nach innen zur Längsachse eingedreht. Dadurch wird bei Überführen des Hubschlauches von der langgestreckten Konfiguration in die kontrahierte Konfiguration die Schlauchquerschnittsfläche kontinuierlich verkleinert.

Die Schlauchwandung des Hubschlauches besteht insbesondere aus einem flexiblen und nicht-extensiblen (d.h. nicht in nennenswertem Ausmaß dehnbaren) Material, beispielsweise einer Folie aus einem geeigneten Kunststoff oder einem luftdichten Fasertuch. Dadurch ist der Hubschlauch reversibel biegbar und faltbar, jedoch nicht im nennenswerten Umfang dehnbar, wobei sich diese Kriterien insbesondere auf die im Verwendungsfall für einen Schlauchheber typischerweise auftretenden Kräfte beziehen.

Die eingangs genannte Aufgabe wird in vorteilhafterweise auch durch eine Handhabungsvorrichtung, insbesondere eine Unterdruckhebevorrichtung wie z.B. einen Schlauchheber, gemäß dem Anspruch 15 gelöst, welcher einen Hubschlauch der vorstehend beschriebenen Art und eine an einem freien Ende des Hubschlauches angeschlossene Greifvorrichtung aufweist.

Es zeigen:
Figur 1: einen erfindungsgemäßen Schlauchheber mit einem erfindungsgemäßen Hubschlauch;
Figur 2: einen erfindungsgemäßen Hubschlauch in Seitenansicht bei im Wesentlichen lang gestreckter Konfiguration;
Figur 3: den Hubschlauch gemäß Figur 2 in einer kontrahierten Konfiguration;
Figur 4: den Hubschlauch gemäß Figuren 2 bis 3 in einer perspektivischen Ansicht;
Figur 5: den Hubschlauch gemäß Figuren 2 bis 4 in einer Ansicht entlang der Längsachse.

In den Figuren sowie in der nachfolgenden Beschreibung sind für identische oder einander entsprechende Merkmale jeweils dieselben Bezugszeichen verwendet.

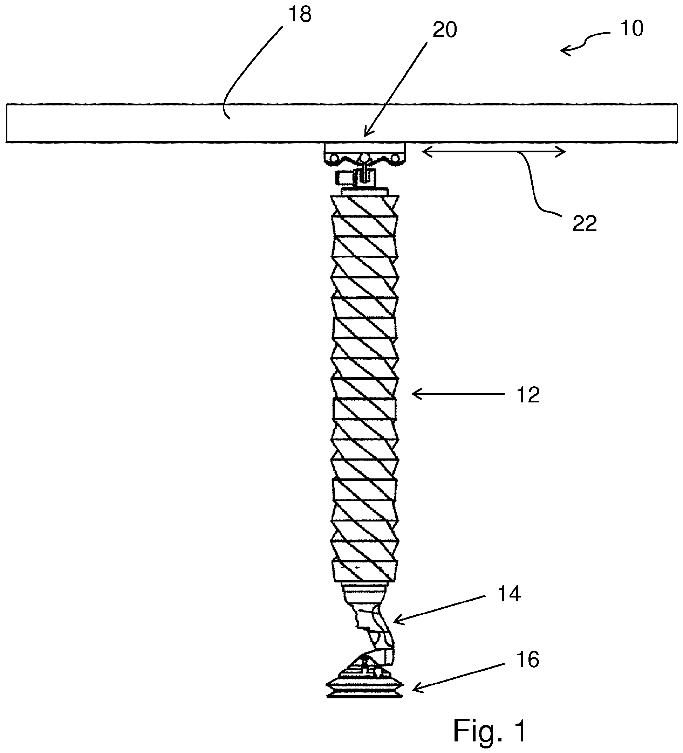

Die Figur 1 zeigt eine Skizze eines Schlauchhebers 10 mit einem nachfolgend noch näher beschriebenen Hubschlauch 12, wobei ein Ende des Hubschlauches 12 über eine Bedienvorrichtung 14 mit einer Unterdruckgreifvorrichtung 16 gekoppelt ist. Mit seinen der Unterdruckgreifvorrichtung 16 entgegengesetzten Ende ist der Hubschlauch 12 mit einem Träger 18 verbunden, insbesondere derart, dass eine Aufhängeposition 20 des Hubschlauches 12 entlang einer lateralen Richtung 22 verschiebbar ist.

Mit der Unterdruckgreifvorrichtung 16 kann ein zu greifender Gegenstand (nicht dargestellt) angesaugt werden. Durch geeignete Bedienung über die Bedienvorrichtung 14 kann dann der Hubschlauch 12 durch Beaufschlagung seines Schlauchinnenraumes (siehe unten) mit Unterdruck verkürzt werden und dadurch der gegriffene Gegenstand angehoben werden.

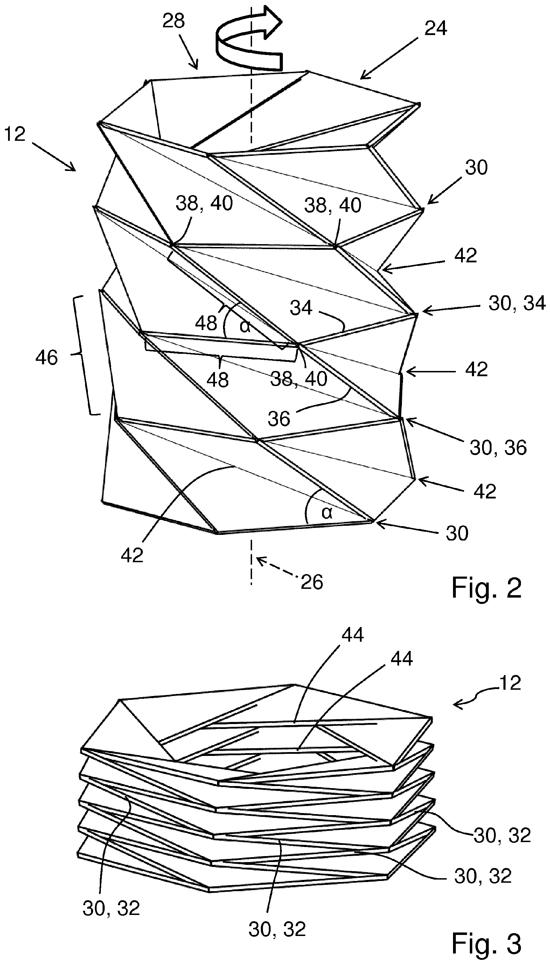

Die Figuren 2 bis 5 zeigen jeweils einen Abschnitt des Hubschlauches 12 in verschiedenen Ansichten und in verschiedenen Konfigurationen.

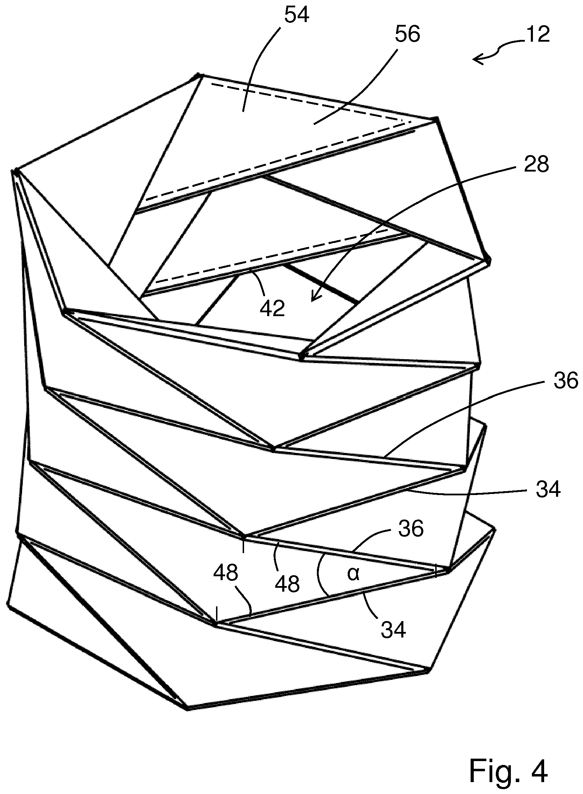

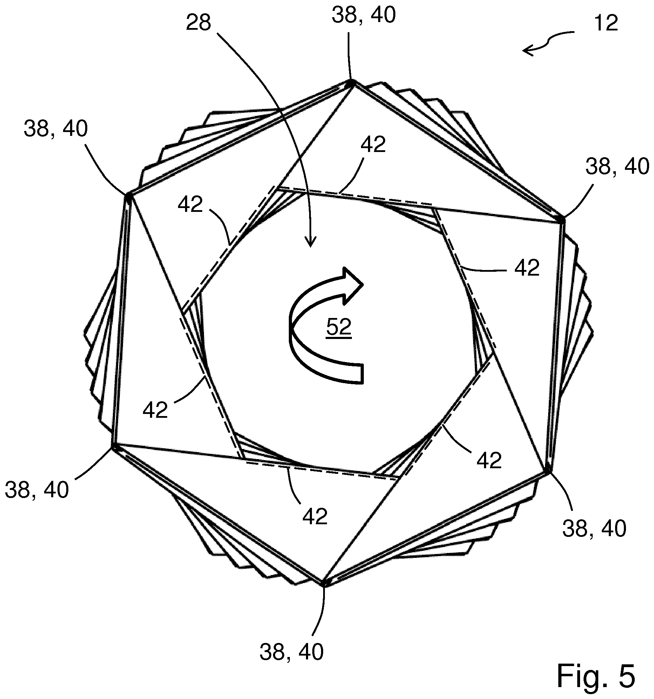

Der Hubschlauch 12 hat eine Schlauchwandung 24 aus einem flexiblen, jedoch vorzugsweise nicht in nennenswertem Ausmaß elastischen Material. Die Schlauchwandung 24 umschließt als Ganzes betrachtet einen sich axial entlang einer Längsachse 26 erstreckenden Schlauchinnenraum 28 (welcher insbesondere in den Ansichten gemäß Figuren 4 und 5 erkennbar ist).

Als Ganzes betrachtet ist der Hubschlauch 12 kontinuierlich in eine langgestreckte Konfiguration (ähnlich Figur 2) und in eine kontrahierte Konfiguration (ähnlich Figur 3) verformbar. Dabei zeigt die Figur 2 im Wesentlichen die lang gestreckte Konfiguration, wobei eine weitere Streckung ggf. noch in geringfügigem Ausmaß möglich ist. Entsprechend ist ausgehend von Figur 3 ggf. noch eine weitere Kontraktion möglich.

Um die Verformung zu ermöglichen, weist die Schlauchwandung 24 eine Vielzahl von Außenknicklinien 30 auf. Das Material der Schlauchwandung 24 hat insbesondere eine gewisse Steifigkeit, sodass die Außenknicklinien 30 dauerhaft definiert sind. Ausgehend von den Außenknicklinien 30 erstreckt sich das Material der Schlauchwandung 24 bei Vorliegen der kontrahierten Konfiguration (vergleiche Figur 3) nach innen, sodass Außenfalten 32 ausgeprägt sind.

In dargestelltem Beispiel sind sämtliche Außenknicklinien in zwei Gruppen unterteilbar, nämlich in Ringknicklinien 34 und Schrägknicklinien 36. Die Ringknicklinien 34 umlaufen jeweils die Längsachse 26 als geschlossene Form, im dargestellten Beispiel, in der Art eines Polygons (hier: Hexagon). Die Schrägknicklinien umlaufen als Ganzes betrachtet die Längsachse 26 schraubenartig. Somit schneiden die Schrägknicklinien die Ringknicklinien in einer Vielzahl von Schnittpunkten 38. Die Schnittpunkte 38 bilden die Ecken 40 der polygonalen Ringknicklinien 34.

Die Schlauchwandung 24 weist außerdem eine Vielzahl von Innenknicklinien 42 auf, entlang welchen die Schlauchwandung 24 jeweils den geringsten Abstand zur Längsachse 26 aufweist. Die Innenknicklinien 42 definieren in der kontrahierten Konfiguration (vergleiche Figur 3) Innenfalten 44 der Schlauchwandung 24. Die Innenknicklinien 42 erstrecken sich zwischen Schnittpunkten 40 jeweils entlang der Längsachse 26 benachbarter Ringknicklinien 34 derart, dass benachbarte Schrägknicklinien 36 verbunden sind.

Beim Falten der Schlauchwandung 24 werden die Schrägknicklinien 36 jeweils auf die sich schneidenden Ringknicklinien 30 gefaltet. Das Material der Schlauchwandung wird unter Ausbildung der Innenfalten 44 in den Schlauchinnenraum 28 eingefaltet. Da die Schrägknicklinien geneigt zu den Ringknicklinien 34 verlaufen, erfahren verschiedene Abschnitte der Schlauchwandung 24 bei Verformung in die kontrahierte Konfiguration (vergleiche Figur 3) eine Torsion, das heißt eine Verdrehung, um die Längsachse 26. Dabei werden die Innenfalten 44 und die Innenknicklinien 42 in den Schlauchinnenraum 28 zu der Längsachse 26 hin eingedreht (vergleiche Figur 4). Dieser Effekt wird im dargestellten Beispiel dadurch verstärkt, dass sämtliche Schrägknicklinien 36 im Wesentlichen parallel zueinander verlaufen.

Die Torsion bei Kontraktion erfolgt um die Längsachse 26 und ist in den Figuren 2 und 5 durch einen Kreispfeil angedeutet. Die Torsion kann insbesondere als eine Verdrehung um die Längsachse 26 von Abschnitten der Schlauchwandung 24 gegenüber anderen, entlang der Längsachse 26 beabstandeten Abschnitten der Schlauchwandung 24 aufgefasst werden. Die Drehrichtung Richtung der Torsion entspricht insbesondere der Öffnungsrichtung der von den Schrägknicklinien 36 mit den Ringknicklinien 34 eingeschlossenen spitzen Winkel (Steigwinkel, siehe unten).

Zwischen parallel verlaufenden und entlang der Längsachse 26 benachbarten Ringknicklinien 34 kann bei Vorliegen der langgestreckten Konfiguration (in der Art von Figur 2) eine Lagenhöhe 46 als Abstand entlang der Längsachse 26 definiert werden (vergleiche Figur 2). Die Lagenhöhe 46 wird bei Überführung in die kontrahierte Konfiguration im Wesentlichen auf die Dicke der zwischen den Ringknicklinien 34 liegenden Innenfalten 44 und Außenfalten 32 reduziert.

Betrachtet im dargestellten Beispiel eine bestimmte Ringknicklinie 34, so schneiden die verschiedenen Schrägknicklinien 36 diese Ringknicklinie 34 in den Schnittpunkten 40 jeweils unter einem Steigwinkel α. Im dargestellten Beispiel ist der Steigwinkel α jeweils der zwischen den Schrägknicklinien 36 und der Ringknicklinie 34 eingeschlossene spitze Winkel, welcher insbesondere für sämtliche Schnittpunkte 40 in dieselbe Umlaufrichtung um die Längsachse 26 geöffnet ist. Der Steigwinkel α hängt mit der Torsion bei Herbeiführung der kontrahierten Lage zusammen, da die Schrägknicklinien 36 um den Winkel α zu den Ringknicklinien 34 hin gefaltet werden.

Bei der dargestellten symmetrischen Ausgestaltung sind die sich zwischen verschiedenen Schnittpunkten 40 erstreckenden Abschnitte der Ringknicklinien 34 beziehungsweise der Schrägknicklinien 36, welche einen bestimmten Steigknickwinkel α einschließen, jeweils gleich lange Schenkel 48. Der dem Steigwinkel α definierende Schenkel 48 der Schrägknicklinie 36 kann dadurch vollständig auf dem den anderen Schenkel 48 bildenden Abschnitt der Ringknicklinie 34 gefaltet werden.

Die Innenknicklinien 42, welche sich zwischen verschiedenen Schnittpunkten 38 erstrecken, bilden vorzugsweise eine Winkelhalbierende des von den Schenkeln 48 eingeschlossenen Steigwinkels α. In diesem Fall können die Innenknicklinien 42 insbesondere Diagonalen 50 der beispielsweise in Figur 2 erkennbaren Parallelogramme bilden, welche jeweils von zwischen Schnittpunkten 38 verlaufenden Abschnitten zweier entlang der Längsachse aufeinanderfolgenden Ringknicklinien 34 und zweier nebeneinander parallel verlaufenden Schrägknicklinien 36 definiert sind.

Wie in der Figur 5 erkennbar, beranden die bei Herbeiführung der kontrahierten Konfiguration in dem Schlauchinnenraum 28 eingefalteten Innenknicklinien 42 entlang der Längsachse 26 betrachtet eine Schlauchquerschnittsfläche 52. Da bei Kontraktion des Hubschlauches 12 die Innenknicklinien 42 immer weiter in den Schlauchinnenraum 28 eingedreht und eingefaltet werden, zieht sich bei zunehmender Kontraktion die Schlauchquerschnittsfläche 52 immer mehr zusammen. Im dargestellten Beispiel weist die Schlauchquerschnittsfläche 52 dieselbe Symmetrie auf, wie die von den Ringknicklinien 34 definierte Außenkontur der Schlauchwandung (hier: hexagonale Symmetrie).

Um die Stabilität der Schlauchwandung 24 gegen radiale Kompression zur Längsachse 26 hin weiter zu verbessern, können die zwischen den Innenknicklinien 42 und den Außenknicklinien 30 definierten Faltsegmente 54 (vergleiche Figur 4) als Verstärkungszonen 56 ausgebildet sein, in welchen die Schlauchwandung 24 stabiler ist und insbesondere eine geringere Flexibilität aufweist. Hierzu können z.B. die Verstärkungszonen 56 mit Harzen oder Kunststoffanteilen im Gewebe der Schlauchwandung 24 versteift sein. Die Bereiche der Innenknicklinien 42 und/oder Außenknicklinien 30 können z.B. mit flexiblen oder weichmachenden Materialen versehen sein (z.B. Silikone). Zur Ausbildung der Verstärkungszonen 56 können auch entsprechend geformte Verstärkungsplatten an der Schlauchwandung 24 vorgesehen sein. Solche Verstärkungsplatten können nach einem allgemeinen Aspekt der Erfindung beispielsweise auf die Schlauchwandung 24 zum Beispiel an der zum Schlauchinnenraum 28 hin gewandten Oberfläche aufgebracht (zum Beispiel aufgeklebt) sein.

Selbstverständlich können Verstärkungsplatten auch an der Außenoberfläche aufgebracht sein.

## Patentansprüche

1. Hubschlauch (12) mit einer sich um eine Längsachse (26) erstreckenden und einen Schlauchinnenraum (28) umschließenden Schlauchwandung (24), wobei der Hubschlauch (12) entlang der Längsachse (26) reversibel in eine langgestreckte Konfiguration und unter Verkleinerung des Schlauchinnenraumes in eine kontrahierte Konfiguration verformbar ist, wobei die Schlauchwandung (24) eine Vielzahl von Außenknicklinien (30) aufweist, entlang welcher die Schlauchwandung (24) zur Herbeiführung der kontrahierten Konfiguration knickbar ist, **dadurch gekennzeichnet, dass** die Außenknicklinien (30) derart schräg zueinander verlaufen, dass beim Verformen in die kontrahierte Konfiguration die Schlauchwandung (24) abschnittsweise eine Torsion um die Längsachse (26) erfährt.

2. Hubschlauch (12) nach Anspruch 1, **dadurch gekennzeichnet, dass** die Außenknicklinien (30) eine Vielzahl von die Längsachse (26) geschlossen umlaufenden Ringknicklinien (34) sowie eine Anzahl (n) von die Ringknicklinien (34) in Schnittpunkten (38) schneidenden Schrägknicklinien (36) umfassen, wobei die Schrägknicklinien (36) derart geneigt zu den Ringknicklinien (34) verlaufen, dass beim Falten der Schlauchwandung (24) die Torsion erzielt wird.

3. Hubschlauch (12) nach dem vorherigen Anspruch, **dadurch gekennzeichnet, dass** die Ringknicklinien (34) senkrecht zur Längsachse (26) verlaufen.

4. Hubschlauch (12) nach den Ansprüchen 2 oder 3, **dadurch gekennzeichnet, dass** in der langgestreckten Konfiguration sämtliche Schrägknicklinien (36) parallel zueinander verlaufen.

5. Hubschlauch (12) nach einem der Ansprüche 2 bis 4, **dadurch gekennzeichnet, dass** sämtliche sich mit einer jeweiligen Ringknicklinie (34) schneidenden Schrägknicklinien (36) mit der Ringknicklinien (34) im Schnittpunkt einen übereinstimmenden spitzen Steigwinkel (α) einschließen.

6. Hubschlauch (12) nach Anspruch 5, **dadurch gekennzeichnet, dass** für jede Ringknicklinie (34) die Summe der Steigwinkel (α) in den Schnittpunkten (38) auf dieser Ringknicklinie (34) 360 Grad beträgt.

7. Hubschlauch (12) nach einem der Ansprüche 2 bis 6, **dadurch gekennzeichnet, dass** die Ringknicklinien (34) jeweils ein regelmäßiges Polygon mit einer Anzahl n von Ecken (40) bilden.

8. Hubschlauch (12) nach wenigstens den Ansprüchen 5 und 7, **dadurch gekennzeichnet, dass** der Steigwinkel (α) den n-ten Bruchteil von 360 Grad beträgt, wobei n die Zahl der Ecken (40) einer jeweiligen Ringknicklinie (34) ist.

9. Hubschlauch (12) nach einem der Ansprüche 2 - 8, **dadurch gekennzeichnet, dass** in jedem Schnittpunkt (38) die sich schneidende Ringknicklinie (34) und Schrägknicklinie (36) jeweils gleich lange Schenkel (48) bilden, die einen spitzen Steigwinkel (α) einschließen.

10. Hubschlauch (12) nach einem der Ansprüche 2 - 9, **dadurch gekennzeichnet, dass** in der langgestreckten Konfiguration die Ringknicklinien (34) entlang der Längsachse (26) äquidistant mit einer Lagenhöhe (46) voneinander beanstandet zueinander angeordnet sind.

11. Hubschlauch (12) nach einem der Ansprüche 2 - 10, **dadurch gekennzeichnet, dass** die Schlauchwandung (24) eine Mehrzahl von Innenknicklinien (42) umfasst, wobei jede Innenknicklinie (42) durch Schnittpunkte (38) zweier entlang der Längsachse (26) benachbarter Ringknicklinien (34) mit verschiedenen Schrägknicklinien (36) verläuft.

12. Hubschlauch (12) nach dem vorherigen Anspruch, **dadurch gekennzeichnet, dass** jede Innenknicklinie (42) jeweils eine Winkelhalbierende der sich schneidenden Ringknicklinie (34) und Schrägknicklinie (36) bildet, durch deren Schnittpunkt (38) auch die jeweilige Innenknicklinie (42) verläuft.

13. Hubschlauch (12) nach einem der Ansprüche 11 oder 12, **dadurch gekennzeichnet, dass** die Schlauchwandung (24) mit
Verstärkungszonen (46) versehen ist, welche von Kanten begrenzt sind, die entlang der einander schneidenden Innenknicklinien (42), Ringknicklinien (34) und Schrägknicklinien (36) verlaufen.

14. Hubschlauch (12) nach einem der Ansprüche 11 - 13, **dadurch gekennzeichnet, dass** die Innenknicklinien (42) in Projektion entlang der Längsachse (26) betrachtet einen Schlauchquerschnittsfläche (52) definieren, welche sich bei Überführen des Hubschlauches (12) von der langstreckten Konfiguration in die kontrahierte Konfiguration kontinuierlich verkleinert.

15. Handhabungsvorrichtung (10), insbesondere Schlauchheber, mit einem Hubschlauch (12), welcher einen Schlauchinnenraum (28) aufweist, wobei der Hubschlauch (12) durch Beaufschlagung des Schlauchinnenraumes (28) mit Unterdruck verkürzbar ist, und mit einer an einem Ende des Hubschlauches (12) angeschlossenen Greifvorrichtung (16), **dadurch gekennzeichnet, dass** der Hubschlauch (12) nach einem der Ansprüche 1 - 14 ausgebildet ist.

## Claims

1. Lifting tube (12) with a tube wall (24) extending around a longitudinal axis (26) and enclosing a tube interior (28), wherein the lifting tube (12) can be reversibly deformed along its longitudinal axis (26) into an elongated configuration and, with reduction of the tube interior, a contracted configuration,
wherein the tube wall (24) has a plurality of outer crease lines (30), along which the tube wall (24) can buckle to produce the contracted configuration,
**characterized in that** the outer crease lines (30) run obliquely to each in such a way that, when deformed into the contracted configuration, sections of the tube wall (24) experience a torsion around the longitudinal axis (26).

2. Lifting tube (12) according to claim 1, **characterized in that** the outer crease lines (30) comprise a plurality of annular crease lines (34) encircling the longitudinal axis (26) in closed manner as well as a number (n) of oblique crease lines (36) intersecting the annular crease lines (34) at intersecting points (38), wherein the oblique crease lines (36) run at a slant to the annular crease lines (34) in such a way that the torsion is achieved upon folding the tube wall (24).

3. Lifting tube (12) according to the preceding claim, **characterized in that** the annular crease lines (34) run perpendicular to the longitudinal axis (26).

4. Lifting tube (12) according to claims 2 or 3, **characterized in that** all oblique crease lines (36) run parallel to each other in the elongated configuration.

5. Lifting tube (12) according to one of claims 2 to 4, **characterized in that** all oblique crease lines (36) which intersect a particular annular crease line (34) make a congruent acute angle of rise (α) with the annular crease line (34) at the intersecting point.

6. Lifting tube (12) according to claim 5, **characterized in that** for each annular crease line (34) the sum of the angles of rise (α) at the intersecting points (38) on this annular crease line (34) totals 360°.

7. Lifting tube (12) according to one of claims 2 to 6, **characterized in that** the annular crease lines (34) have the shape of a regular polygon with a number n of corners (40).

8. Lifting tube (12) according to at least claims 5 and 7, **characterized in that** the angle of rise (α) amounts to the n-th fraction of 360 degrees, where n is the number of corners (40) of the particular annular crease line (34).

9. Lifting tube (12) according to one of claims 2 to 8, **characterized in that** the intersecting annular crease line (34) and oblique crease line (36) at each intersecting point (38) form equal-length legs (48) subtending an acute angle of rise (α).

10. Lifting tube (12) according to one of claims 2 to 9, **characterized in that** in the elongated configuration the annular crease lines (34) are arranged along the longitudinal axis (26) spaced apart from each other equidistant with a layer height (46).

11. Lifting tube (12) according to one of claims 2 to 10, **characterized in that** the tube wall (24) comprises a plurality of inner crease lines (42), each inner crease line (42) running through intersecting points (38) of two neighboring annular crease lines (34) along the longitudinal axis (26) with various oblique crease lines (36).

12. Lifting tube (12) according to the preceding claim, **characterized in that** each inner crease line (42) forms a bisector of the angle of the intersecting annular crease line (34) and oblique crease line (36), through whose intersecting point (38) the respective inner crease line (42) also runs.

13. Lifting tube (12) according to one of claims 11 or 12, **characterized in that** the tube wall (24) is provided with reinforcement zones (46), which are bounded by edges which run along the intersecting inner crease lines (42), annular crease lines (34) and oblique crease lines (36).

14. Lifting tube (12) according to one of claims 11 to 13, **characterized in that** the inner crease lines (42), when viewed in a projection along the longitudinal axis (26), define a cross sectional area of the tube (52), which is continually reduced as the lifting tube (12) is converted from the elongated configuration to the contracted configuration.

15. Handling device (10), especially tube lifter, with a lifting tube (12), having a tube interior (28), wherein the lifting tube (12) is configured to be shortened by applying a low pressure to the tube interior (28), and with a gripping device (16) connected to one end of the lifting tube (12), **characterized in that** the lifting tube (12) is configured according to one of claims 1 - 14.

## Revendications

1. Tuyau de levage (12) comprenant une paroi de tuyau (24) s'étendant autour d'un axe longitudinal (26) et entourant un volume interne (28), ce tuyau de levage (12) pouvant être déformé de façon réversible le long de l'axe longitudinal (26) entre une configuration déployée longitudinalement et une configuration contractée dans laquelle le volume interne est diminué, la paroi (24) du tuyau comportant un ensemble de lignes de flexion (30) le long desquelles la paroi (24) du tuyau peut être pliée pour passer dans la configuration contractée,
**caractérisé en ce que**
les lignes de flexion externes (30) s'étendent obliquement les unes par rapport aux autres de sorte que lors de la déformation dans la configuration contractée, la paroi (24) du tuyau soit soumise par sections à une torsion autour de l'axe longitudinal (26).

2. Tuyau de levage (12) conforme à la revendication 1,
**caractérisé en ce que**
les lignes de flexion externes (30) comprennent un ensemble de lignes de flexion annulaires fermées (34) entourant l'axe longitudinal (26) et une série de (n) lignes de flexion obliques (36) coupant les lignes de flexion annulaires (34) au niveau de points d'intersection (38), les lignes de flexion obliques (36) étant inclinées par rapport aux lignes de flexion annulaires (34) de façon à obtenir la torsion lors du pliage de la paroi (24) du tuyau.

3. Tuyau de levage (12) conforme à la revendication précédente,
**caractérisé en ce que**
les lignes de flexion annulaires (34) s'étendent perpendiculairement à l'axe longitudinal (26).

4. Tuyau de levage (12) conforme à la revendication 2 ou 3,
**caractérisé en ce que**
dans la configuration déployée longitudinalement, toutes les lignes de flexion obliques (36) s'étendent parallèlement les unes aux autres.

5. Tuyau de levage (12) conforme à l'une des revendications 2 à 4,
**caractérisé en ce que**
toutes les lignes de flexion obliques (36) coupant une ligne de flexion annulaire respective (34) définissent, avec la ligne de flexion annulaire (34), au niveau du point d'intersection un angle de montée aigu (α) concordant.

6. Tuyau de levage (12) conforme à la revendication 5,
**caractérisé en ce que**
pour chaque ligne de flexion annulaire (34) la somme des angles de montée (α) au niveau des points d'intersection (38) situés sur cette ligne de flexion annulaire (34) est égale à 360°.

7. Tuyau de levage (12) conforme à l'une des revendications 2 à 6,
**caractérisé en ce que**
les lignes de flexion annulaires (34) forment respectivement un polygone régulier ayant n sommets (40).

8. Tuyau de levage (12) conforme à au moins les revendications 5 et 7,
**caractérisé en ce que**
l'angle de montée (α) est égal à la énième fraction de 360°, n étant le nombre de sommets (40) d'une ligne de flexion annulaire (34) respective.

9. Tuyau de levage (12) conforme à l'une des revendications 2 à 8,
**caractérisé en ce qu'**
au niveau de chaque point d'intersection (38), les lignes de flexion annulaires (34) et les lignes de flexion obliques (36) qui se coupent forment respectivement des branches (48) de même longueur qui définissent un angle de montée aigu (α).

10. Tuyau de levage (12) conforme à l'une des revendications 2 à 9,
**caractérisé en ce que**
dans la configuration déployée longitudinalement, les lignes de flexion annulaires (34) sont équidistantes le long de l'axe longitudinal (26) avec une hauteur de couche (46).

11. Tuyau de levage (12) conforme à l'une des revendications 2 à 10,
**caractérisé en ce que**
la paroi (24) du tuyau comporte un ensemble de lignes de flexion internes (42), chaque ligne de flexion interne (42) passant par les points d'intersection (38) de deux lignes de flexion annulaires (34) voisines le long de l'axe longitudinal (26) avec des lignes de flexion obliques (36) différentes.

12. Tuyau de levage (12) conforme à la revendication précédente,
**caractérisé en ce que**
chaque ligne de flexion interne (42) forme respectivement la bissectrice d'une ligne de flexion annulaire (34) et d'une ligne de flexion oblique (36) qui se coupent, et passe également par le point d'intersection (38) de ces lignes de flexion.

13. Tuyau de levage (12) conforme à l'une des revendications 11 et 12,
**caractérisé en ce que**
la paroi (24) du tuyau comporte des zones de renforcement (46) qui sont limitées par des arêtes qui s'étendent le long des lignes de flexion internes (42) des lignes de flexion annulaires (34) et des lignes de flexion obliques (36) qui se coupent.

14. Tuyau de levage (12) conforme à l'une des revendications 11 à 13,
**caractérisé en ce que**
considérées en projection le long de l'axe longitudinal (26) les lignes de flexion internes (42) définissent une surface de section transversale (52) du tuyau de levage (12) qui se réduit de manière continue lors du transfert de ce tuyau de la configuration déployée longitudinalement à la configuration contractée.

15. Dispositif de manipulation (10), en particulier dispositif de levage par tuyau comprenant un tuyau de levage (12) comprenant un volume interne (28), ce tuyau de levage (12) pouvant être raccourci par mise sous dépression du volume interne (28), ainsi qu'un dispositif de préhension (16) connecté à une extrémité du tuyau de levage (12),
**caractérisé en ce que**
le tuyau de levage (12) est réalisé conformément à l'une des revendications 1 à 14.
